# FASCICULE DE BREVET EUROPEEN

(11) **EP 3 670 854 B1**
(45) Date de publication et mention de la délivrance du brevet: **30.04.2025**
(21) Numéro de dépôt: 19217998.4
(22) Date de dépôt: 19.12.2019
(51) Int. Cl.: F01K 13/00, F01K 25/06

(54) **SYSTÈME DE COGÉNÉRATION D'ÉNERGIE ÉLECTRIQUE ET D'ÉNERGIE THERMIQUE PAR UN MODULE DE CYCLE DE RANKINE**
SYSTEM ZUR GLEICHZEITIGEN ERZEUGUNG VON ELEKTRISCHER ENERGIE UND WÄRMEENERGIE MITHILFE EINES RANKINE-PROZESS-MODULS
SYSTEM FOR CO-GENERATION OF ELECTRICAL ENERGY AND THERMAL ENERGY BY A RANKINE CYCLE MODULE

(30) Priorité: 19.12.2018 FR 1873433
(43) Date de publication de la demande: 24.06.2020
(73) Titulaire: Commissariat à l'Energie Atomique et aux Energies Alternatives, 75015 Paris (FR); Université Grenoble Alpes, 38400 Saint-Martin-d'Hères (FR); Centre National de la Recherche Scientifique, 75016 Paris (FR); Institut Polytechnique de Grenoble, 38000 Grenoble (FR)
(72) Inventeur: BLONDEL, Quentin, 38054 GRENOBLE CEDEX 09 (FR); CANEY, Nadia, 38120 LE FONTANIL (FR); TAUVERON, Nicolas, 38054 GRENOBLE CEDEX 09 (FR)
(74) Mandataire: Hautier IP

(56) Documents cités:
- EP-A1- 2 320 058
- EP-A2- 2 660 512
- JP-A- H0 712 306
- JP-A- H04 342 805
- JP-A- H05 118 206
- JP-A- H09 103 650

## Description

### DOMAINE TECHNIQUE

La présente invention concerne les systèmes de co-production d'énergie électrique et thermique.

Elle trouve pour application avantageuse les systèmes de production d'énergie de petite puissance, faisant appel à un cycle thermodynamique de Rankine. Elle s'appliquera par exemple à la production d'énergie à partir des rejets thermiques à basse température stationnaires, produits par des usines notamment dans l'industrie de la transformation (métallurgie, chimie, papeterie) ou à partir de la chaleur issue de systèmes récupérant de l'énergie solaire ou issue de la biomasse, ou embarqués, par des moteurs thermiques de véhicules.

### ÉTAT DE LA TECHNIQUE

Il existe de nombreuses solutions pour produire de l'électricité ou une énergie mécanique à partir d'une source de chaleur. Par exemple document EP2 660 512 A2 divulgue un dispositif de mélange amélioré de registre de gaz de combustion. Ce dispositif a pour but de résoudre le problème du contrôle du refroidissement des gaz de combustion. Le dispositif du document D1 est prévu pour assurer une température fixe au réacteur catalytique. De ce fait, document D1 prévoit un système de by-pass (41) et un registre de commande d'entrée (35) pour contrôler la séparation du flux de gaz et son mélange de sorte à détourner une partie du flux de gaz de la circulation dans l'économiseur (13).

Parmi les solutions connues figurent les machines génératrices basées sur un cycle de Rankine. Les cycles de Rankine reposent tous sur des transformations comprenant successivement: le pompage d'un fluide de travail sous forme liquide, la création de vapeur et sa surchauffe éventuelle, la détente de la vapeur pour générer un mouvement et la condensation de la vapeur. Le fluide de travail peut être choisi parmi l'eau, le dioxyde de carbone, l'ammoniaque ou un fluide organique ou un mélange de ces composants. Dans le cas d'un fluide organique ou un mélange de fluides organiques, on parle de cycle organique de Rankine. La majorité des systèmes de production électrique thermique sont basés sur l'utilisation de tels cycles.

Une machine reposant sur un cycle de Rankine est, de manière connue, constituée de quatre organes principaux, à savoir :
▪ une pompe permettant la mise en circulation du fluide et la remontée de sa pression ;
▪ un échangeur chaud exploitant la source de chaleur disponible à valoriser, désigné évaporateur ;
▪ un expanseur ou organe de détente transformant la variation d'enthalpie du fluide en énergie mécanique, puis en énergie électrique en présence d'une génératrice également désignée alternateur ;
▪ un échangeur froid permettant la condensation de la vapeur restante après détente, désigné condenseur.

C'est sur ce type de cycle thermodynamique que se base la majorité des centrales nucléaires, des centrales thermiques à charbon, ou encore des centrales thermiques à fuel lourd, afin de produire des puissances élevées. Pour ces applications, les sources chaudes présentent une puissance et une température très élevées.

Les industries de transformation, par exemple la métallurgie, la chimie ou encore la papeterie, génèrent des rejets thermiques à basse température, c'est-à-dire des rejets thermiques dont la température est le plus souvent inférieure à 200°C, voire inférieure à 150°C. Les systèmes basés sur un cycle de Rankine permettraient théoriquement de produire de l'énergie électrique ou mécanique à partir de ces rejets thermiques. Cependant, les puissances qui pourraient être produites seraient alors relativement faibles, typiquement de l'ordre de quelques kilowatts à une centaine de kilowatts pour des rejets thermiques inférieurs au mégawatt, à cause du rendement thermodynamique faible.

À ces niveaux de températures et de puissances, il n'existe à ce jour aucune solution de valorisation réellement satisfaisante, en raison des investissements nécessaires et des rendements de conversion qui ne sont pas considérés comme suffisants.

Ces rejets thermiques à basse température sont alors en pratique peu exploités et valorisés.

Il est connu du document FR2982118 de prévoir une cogénération énergie électrique et énergie thermique par un cycle organique de Rankine fonctionnant à partir d'une source de chaleur de type biomasse, solaire ou récupérateur de chaleur fatale et comprenant une source froide qui est réchauffée par le condenseur permettant de produire une énergie thermique. Le système comprend également un récupérateur interne permettant de transmettre la chaleur du fluide de travail issu de l'alternateur avant son entrée dans le condenseur, au fluide de travail issu de la pompe avant son entrée dans l'évaporateur.

Toutefois, la température de la source froide en sortie du condenseur reste assez faible, notamment dans des valeurs généralement de l'ordre de 40°C, et donc difficilement valorisable.

Il existe donc le besoin de proposer un système de cogénération électrique - thermique dont l'énergie thermique puisse être plus intéressante pour diverses possibilités de valorisation.

### RÉSUMÉ

Pour atteindre cet objectif, selon un mode de réalisation, la présente invention prévoit un système de cogénération d'énergie électrique et énergie thermique comprenant :
▪ un module à cycle organique de Rankine destiné à la production d'énergie électrique comprenant une pompe, un échangeur de préchauffage, un évaporateur, un expanseur, un condenseur et un circuit fluidique apte à recevoir un fluide de travail, avantageusement le circuit fluidique reliant la pompe à un échangeur de préchauffage, l'échangeur de préchauffage à l'évaporateur, l'évaporateur à l'expanseur, l'expanseur au condenseur, le condenseur à la pompe, et
▪ un circuit de circulation d'une source de chaleur comprenant une première branche agencée au niveau de l'évaporateur pour assurer un échange thermique entre la source chaude et le fluide de travail au niveau de l'évaporateur,
▪ caractérisé en ce que le circuit de circulation de la source de chaleur comprend :
   ▪ une deuxième branche agencée au niveau de l'échangeur de préchauffage pour assurer un échange thermique entre la source chaude issue de l'évaporateur et le fluide de travail au niveau de l'échangeur de préchauffage, la première branche et la deuxième branche étant agencée en série de sorte que la source de chaleur circule successivement dans la première branche puis dans la deuxième branche, et
   ▪ une sortie de piquage agencée entre la première branche et la deuxième branche pour assurer une sortie intermédiaire de la source chaude issue de l'évaporateur configurée pour être connectée à une unité de valorisation de l'énergie thermique destinée à utiliser l'énergie thermique de la source chaude.

Le système selon l'invention permet une meilleure adéquation, notamment en termes de température, entre le fluide de travail et la source chaude en assurant une différenciation possible des débits de la source chaude au niveau de l'échangeur de préchauffage et de l'évaporateur. L'adéquation entre le fluide de travail et la source chaude permet d'avoir des échangeurs optimisés c'est-à-dire que le système est optimisé pour prélever les calories justes nécessaires pour que le module du cycle de Rankine assure la production d'électricité et ainsi permettre à la source chaude de conserver une température intéressante pour être valorisée en tant qu'énergie thermique. Cette disposition permet en outre une valorisation de la chaleur au niveau de la source chaude ayant des températures plus élevées et donc assurant une meilleure valorisation que les systèmes de l'état de la technique assurant une cogénération au niveau du condenseur.

Le système selon l'invention permet avantageusement de faire varier les conditions de fonctionnements dudit système et en particulier du module de Rankine et cela de manière simple. Ces adaptations des conditions de fonctionnements sont par exemple fonction de contraintes extérieures telles que la variabilité de la source chaude, la variabilité d'une source froide agencée au niveau du condenseur dépendante couramment des conditions climatiques extérieures ou fonction des besoins en énergies et de leurs valorisations financières.

Le système comprend au moins un degré de liberté supplémentaire par rapport à un module de Rankine connu qui possède comme degrés de liberté par exemple la vitesse de la pompe, la vitesse de la turbine, éventuellement un sous refroidissement.

Selon l'invention, la sortie de piquage et le contrôle du débit de prélèvement à la sortie de piquage permettent un degré de liberté supplémentaire permettant d'adapter le fonctionnement du système pour l'optimiser.

Selon un mode de réalisation préféré, le fluide de travail comprenant un mélange zéotrope constitue un deuxième degré de liberté supplémentaire permettant d'adapter le fonctionnement du système pour l'optimiser.

Selon un aspect, l'invention concerne un procédé de cogénération d'énergie électrique et d'énergie thermique par un système de cogénération tel que décrit ci-dessus comprenant la circulation d'une source chaude au niveau de l'évaporateur et de l'échangeur de préchauffage pour assurer la production d'énergie électrique par le module de cycle organique de Rankine et la circulation de la source chaude au niveau de la sortie de piquage pour la valorisation de l'énergie thermique de la source chaude.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un schéma d'un système de co-production selon l'invention.
La figure 2 représente un diagramme thermodynamique du fluide de travail dans le module de Rankine et de la source chaude dans un système de co-production selon la Figure 1.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Avantageusement, le fluide de travail comprend un mélange d'au moins deux fluides, le mélange étant zéotrope. Cette caractéristique assure une composition du fluide de travail dont les proportions des au moins deux fluides sont variables. Cela permet de faire varier la température d'ébullition du fluide de travail en fonction des besoins en énergie électrique et de la température de la source chaude pour permettre la meilleure adéquation possible entre les deux.

Avantageusement, le système comprend une unité de valorisation associée à la sortie de piquage 203 configurée pour la valorisation de la source chaude 200 au niveau de la sortie de piquage 203. La valorisation en sortie de piquage assure une température de la source chaude supérieure à ce qui est habituellement constatée lors de valorisation de la source froide en sortie du condenseur.

Avantageusement, le système comprend une unité de valorisation associée à une sortie 205 de la deuxième branche 208 configurée pour la valorisation de la source chaude 200 à la sortie de la deuxième branche 208. La valorisation en sortie de la deuxième branche, c'est-à-dire en sortie du préchauffeur, permet de compléter éventuellement la valorisation. La source chaude passe ainsi par une unité de valorisation avant ou au lieu d'être renvoyée dans la première branche.

La valorisation de l'énergie thermique s'entend comme l'utilisation de l'énergie thermique pour diverses applications par exemple pour des réseaux de chaleurs. La valorisation est réalisée par exemple par une unité de valorisation qui permet d'utiliser cette énergie thermique. Selon une possibilité, l'unité de valorisation comprend un échangeur thermique destiné à transférer à une source finale l'énergie thermique de la source issue du système. Selon une autre possibilité, la source chaude est directement la source finale qui est directement utilisé pour son énergie thermique.

Avantageusement, le système comprend un circuit de circulation d'une source froide 300 au niveau du condenseur 104, avantageusement configuré pour valoriser la chaleur fatale dissipée par le condenseur 104.

Avantageusement, le système comprend une unité de valorisation associée à la source froide 300 configurée pour la valorisation de la source froide 300 en sortie 302 du condenseur 104.

Avantageusement, le système comprend un module de réglage du débit prélèvement de la source chaude 200 au niveau de la sortie de piquage 203.

Avantageusement, le système comprend un dispositif de contrôle de la composition du fluide de travail de sorte à gérer la composition du fluide de travail.

Avantageusement, le procédé comprend le réglage du débit de prélèvement de la source chaude 200 au niveau de la source de piquage 203 en fonction des besoins en production d'énergie électrique et en production d'énergie thermique.

Avantageusement, le procédé comprend le contrôle de du débit de prélèvement de la source chaude 200 au niveau de la sortie de piquage 203 en fonction des besoins en production d'énergie électrique et en production d'énergie thermique.

Avantageusement, le procédé comprend le contrôle de la composition du fluide de travail de sorte à faire varier ladite composition.

Dans la présente description, l'expression « A fluidiquement raccordé à B» est synonyme de" A est en connexion fluidique avec B" ne signifie pas nécessairement qu'il n'existe pas d'organe entre A et B. Les expressions "agencée sur" ou "sur" sont synonymes de "raccordé fluidiquement à".

L'amont et l'aval en un point donné sont pris en référence au sens de circulation du fluide dans le circuit.

Le système selon l'invention permet la cogénération d'énergie thermique et d'énergie électrique de manière optimisée.

Le système comprend un module à cycle organique de Rankine (Organic Rankine Cycle, ORC, en anglais). Le module à cycle organique de Rankine, également dénommé dans la suite module de Rankine, permet notamment de produire une puissance mécanique à partir d'une source chaude à basse ou moyenne température. Le module de Rankine permet de valoriser l'énergie thermique en transformant l'énergie thermique en énergie mécanique. À titre d'exemple, l'énergie thermique est issue de l'industrie de transformation (métallurgie, chimie, papeterie...) avec les rejets thermiques à basse température, du transport avec moteur thermique dans lequel on a des besoins de chaleur : automobile, bateau, ou du solaire à concentration, ou de la biomasse ou de la géothermie.

Selon un mode de réalisation de l'invention, le module de Rankine comprend un expanseur 103 et une pompe 100 agencés en série avec un évaporateur 102 et un condenseur 104 et selon l'invention un échangeur de préchauffage 101. Le module de Rankine comprend circuit fluidique thermodynamique 110 destiné à recevoir un fluide de travail. Avantageusement, le circuit fluidique thermodynamique 110 assure la connexion fluidique des constituants du module de Rankine de sorte que le fluide de travail les traverse préférentiellement successivement dans l'ordre si après, l'échangeur de préchauffage 101, l'évaporateur 102, l'expanseur 103, le condenseur 104 et la pompe 100, puis à nouveau l'échangeur de préchauffage 101. Le circuit fluidique 110 est avantageusement un circuit fermé.

Le module de Rankine comprend avantageusement un fluide de travail. Le fluide de travail peut être un fluide pur. Selon un mode de réalisation préféré, le fluide de travail est un mélange de fluides, au moins deux fluides, voire plus. Préférentiellement, le mélange est choisi pour être un mélange zéotrope, c'est-à-dire que la température d'ébullition du mélange est variable indépendamment de la pression, ce qui entraine une variation de la composition du mélange. La concentration des constituants du mélange peut être ajustée pour optimiser la performance du module de Rankine à un instant donné, soit pour un usage particulier en début d'utilisation, soit de manière continue. Selon ce mode de réalisation, le système comprend avantageusement un dispositif de contrôle de la composition du fluide de travail. Avantageusement, le dispositif de contrôle de la composition du fluide de travail comprend un dispositif de distillation du mélange et/ou de prélèvement du fluide de travail pour ajuster la composition de celui-ci.

Le fluide de travail est de préférence organique. Le fluide de travail est de préférence un mélange de :
▪ premier fluide : 1,1,1,2,2,4,5,5,5-nonafluoro-4-(trifluoromethyl)-3-pentanone
▪ deuxième fluide : 1-methoxyheptafluoropropane ; présentant un potentiel de réchauffement global (PRG ou GWP en anglais pour Global Warming Potential) de 530.

À titre d'exemple, la fraction molaire du premier fluide est de 70% et la fraction molaire du deuxième fluide est de 30%.

Selon un aspect de l'invention, le module de Rankine comprend un échangeur de préchauffage 101. L'échangeur de préchauffage 101 est un échangeur thermique agencé sur le circuit fluidique 110 du module de Rankine. L'échangeur de préchauffage 101 est configuré pour chauffer le fluide de travail jusqu'à la température de vaporisation c'est-à-dire en d'autres termes jusqu'à l'apparition de la première bulle de vapeur. Le fluide de travail entre dans l'échangeur de préchauffage 101 à l'état liquide comprimé et ressort à l'état en début d'état diphasique (liquide-vapeur), le fluide de travail présente un titre thermodynamique strictement positif.

Avantageusement, l'échangeur de préchauffage 101 est connecté fluidiquement à la pompe 100 et à l'évaporateur 102. L'échangeur de préchauffage 101 comprend une connexion fluidique avec la pompe 100 permettant l'entrée du fluide de travail dans l'échangeur de préchauffage 101, préférentiellement directement. L'échangeur de préchauffage 101 comprend une connexion fluidique avec l'évaporateur 102 permettant la sortie du fluide de travail hors de l'échangeur de préchauffage 101, préférentiellement directement. Préférentiellement, l'entrée de l'échangeur de préchauffage 101 est connectée fluidiquement à la sortie de la pompe 100 et la sortie de l'échangeur de préchauffage 101 est connectée fluidiquement à l'entrée de l'évaporateur 102. L'échangeur de préchauffage 101 est thermiquement couplé à une source de chaleur 200, dénommée source chaude. Avantageusement, l'échangeur de préchauffage 101 est thermiquement couplé à une deuxième branche 208 d'un circuit de circulation de la source de chaleur 200. L'échangeur de préchauffage 101 comprend une entrée 204 et une sortie 205 de source de chaleur 200 permettant l'apport de chaleur nécessaire à la vaporisation du fluide de travail.

Le module de Rankine comprend également un évaporateur 102. L'évaporateur 102 est un échangeur thermique agencé sur le circuit fluidique 110 du module de Rankine. L'évaporateur 102 est configuré pour évaporer complètement le fluide de travail. Préférentiellement le fluide de travail ressort légèrement surchauffer de ne pas envoyer à l'expanseur de gouttelettes de liquide.

Avantageusement, l'évaporateur 102 est connecté fluidiquement à la l'échangeur de préchauffage 101 et à l'expanseur 103. L'évaporateur 102 comprend une connexion fluidique avec l'échangeur de préchauffage 101 permettant l'entrée du fluide de travail l'évaporateur 102, préférentiellement directement. L'évaporateur 102 comprend une connexion fluidique avec l'expanseur 103 permettant la sortie du fluide de travail hors de l'évaporateur 102, préférentiellement directement. Préférentiellement, l'entrée de l'évaporateur 102 est connectée fluidiquement à la sortie de l'échangeur de préchauffage 101 et la sortie de l'évaporateur 102 est connectée fluidiquement à l'entrée de l'expanseur 103. L'évaporateur 102 est thermiquement couplé à la source de chaleur 200. Avantageusement, l'évaporateur 102 est thermiquement couplé à une première branche 207 du circuit de circulation de la source de chaleur 200. L'évaporateur 102 comprend une entrée 201 et une sortie 202 de source de chaleur 200 permettant l'apport de chaleur nécessaire à la surchauffe du fluide de travail.

Le module de Rankine comprend également un expanseur 103 tel que par exemple une machine volumétrique de détente ou une turbine. Cet expanseur 103 permet de détendre le fluide de travail et de produire une énergie mécanique à partir de cette détente. Le fluide de travail entre dans l'expanseur 103 sous forme de vapeur comprimée haute pression et ressort de l'expanseur 103 sous forme de vapeur détendue basse pression. Dans un mode de réalisation, cette énergie est récupérée sur un arbre tournant. Cette énergie mécanique peut ensuite être récupérée sous forme électrique au niveau d'un l'alternateur situé sur ledit arbre tournant ou d'un compresseur ou d'une pompe permettant l'utilisation de l'énergie mécanique directement. L'expanseur 103 est par exemple dérivé d'une machine volumétrique de détente conventionnelle de l'industrie frigorifique, d'autres turbomachines ou machines volumétriques spécifiques seront plus cependant plus efficaces.

L'expanseur 103 est connecté fluidiquement à l'évaporateur 102 et au condenseur 104. L'expanseur 103 comprend une connexion fluidique avec l'évaporateur 102 permettant l'entrée du fluide de travail dans l'expanseur 103, préférentiellement directement. L'expanseur 103 comprend une connexion fluidique avec le condenseur 104 permettant la sortie du fluide de travail hors de l'expanseur 103, préférentiellement directement. Préférentiellement, l'entrée de l'expanseur 103 est connectée fluidiquement à la sortie de l'évaporateur 102 et la sortie de l'expanseur 103 est connectée fluidiquement à l'entrée du condenseur 104.

Le module de Rankine comprend également un condenseur 104. Le condenseur 104 est un échangeur thermique agencé sur le circuit fluidique 110 du module de Rankine. Le condenseur 104 est configuré pour refroidir le fluide de travail. Le fluide de travail entre dans le condenseur 104 à l'état de vapeur détendue basse pression et ressort à l'état liquide, préférentiellement sous-refroidi pour éviter les risques de cavitation dans la pompe.

Avantageusement, le condenseur 104 est connecté fluidiquement à l'expanseur 103 et à la pompe 100. Le condenseur 104 comprend une connexion fluidique avec l'expanseur 103 permettant l'entrée du fluide de travail dans le condenseur 104, préférentiellement directement. Le condenseur 104 comprend une connexion fluidique avec la pompe 100 permettant la sortie du fluide de travail hors du condenseur 104, préférentiellement directement. Préférentiellement, l'entrée du condenseur 104 est connectée fluidiquement à la sortie de l'évaporateur 102 et la sortie du condenseur 104 est connectée fluidiquement à l'entrée de la pompe 100.

Le condenseur 104 est thermiquement couplé à une deuxième source, dénommée source froide 300, plus froide que la première source de chaleur 200 et permettant de refroidir le fluide de travail pour le condenser, voire le sous-refroidir. Lors de ce refroidissement, la température de rosée est atteinte. Le refroidissement s'accompagne dès lors du phénomène de condensation.

Le module de Rankine comprend également une pompe 100. De préférence, elle permet au fluide de travail d'être comprimé. Le fluide de travail pénètre au niveau de pompe 100 à l'état liquide et ressort l'état liquide comprimée haute pression. La pompe 100 nécessite un apport d'énergie 400, classiquement sous forme d'électricité pour mettre en mouvement le fluide de travail.

Avantageusement, la pompe 100 est connectée fluidiquement au condenseur 104 et l'échangeur de préchauffage 101. La pompe 100 comprend une connexion fluidique avec le condenseur 104 permettant l'entrée du fluide de travail dans la pompe 100, préférentiellement directement. La pompe 100 comprend une connexion fluidique avec l'échangeur de préchauffage 101 permettant la sortie du fluide de travail hors de la pompe 100, préférentiellement directement. Préférentiellement, l'entrée de la pompe 100 est connectée fluidiquement à la sortie du condenseur 104 et la sortie de la pompe est connectée fluidiquement à l'entrée de l'échangeur de préchauffage 101.

Selon une possibilité, le système selon l'invention comprend un ballon tampon (non représenté) configuré pour recevoir et avantageusement stocker le fluide de travail. Le ballon tampon est agencé entre le condenseur 104 et la pompe 100, plus précisément entre la sortie du condenseur 104 et l'entrée de pompe 100.

Selon une possibilité, le système comprend une pompe de gavage agencée juste en amont de la pompe 100. La pompe de gavage permet notamment de limiter les risques de cavitation au niveau de la pompe 100.

Selon l'invention, la source de chaleur ou source chaude 200 est un fluide par exemple de l'eau qui est chauffée. À titre d'exemple, la source chaude est chauffée au moins partiellement par les rejets thermiques et/ou par la biomasse et/ou par géothermie et/ou par l'énergie solaire et/ou par la chaleur fatale issue d'un moteur thermique.

Selon l'invention, le système de co-production comprend un circuit de circulation de la source chaude 200. Le circuit de circulation comprend une première branche 207 agencée au niveau de l'évaporateur 102 assurant l'échange thermique 602 entre la source chaude et le fluide de travail circulant dans l'évaporateur 102 du module de Rankine. Le circuit de circulation comprend avantageusement une deuxième branche 208 agencée au niveau de l'échangeur de préchauffage 101 assurant l'échange thermique 601 entre la source chaude et le fluide de travail circulant dans l'échangeur de préchauffage 101 du module de Rankine. La première branche 207 et la deuxième branche 208 sont en série, la source chaude circule successivement au travers de la première branche 207 puis au travers de la deuxième branche 208. De manière caractéristique, le circuit de circulation de la source chaude comprend une sortie de piquage 203 de la source chaude. La sortie de piquage 203 est agencée entre la première branche 207 et la deuxième branche 208. Plus précisément, la sortie de piquage 203 est agencée entre la sortie de 202 de la source chaude de l'évaporateur 102 et l'entrée 204 de la source chaude dans l'échangeur de préchauffage 101. La sortie de piquage est une conduite permettant la dérivation au moins partielle de la source chaude en sortie de la première branche 207, c'est à dire en sortie de l'évaporateur 102. La sortie de piquage 203 est avantageusement connectée à une unité de valorisation configurée pour valoriser l'énergie thermique de la source chaude. L'unité valorisation peut permettre d'utiliser l'énergie thermique en tant que telle par exemple pour des applications de chauffage ou bien pour la production de froid par exemple grâce à une machine à absorption. La sortie de piquage 203 assure une sortie de la source chaude 200 en sortie de l'évaporateur 102.

La source chaude ressort de la deuxième branche 208 par la sortie 205. Selon une possibilité, la source chaude en sortie 205 est valorisée avantageusement par une unité de valorisation à basse température, éventuellement avant de retourner avantageusement vers un dispositif permettant de chauffer la source chaude qui est ensuite renvoyée vers la première branche 207.

Selon une possibilité préférée, le système comprend un module de réglage du débit de prélèvement de la source chaude dans la sortie de piquage 203, par exemple une vanne 206 associée à un débitmètre permet de contrôler le débit de la source chaude qui en sortie 202 de l'évaporateur 102 est dirigée vers la sortie de piquage 203 ou vers l'entrée 204 de l'échangeur de préchauffage 101.

Selon une possibilité avantageuse, le système comprend également un module de réglage du débit de la source chaude circulant dans la première branche 207 et dans la deuxième branche 208.

Selon un mode de réalisation, le système comprend une unité de valorisation couplée à la source froide 300 traversant le condenseur 104. La source froide transversant le condenseur 104 récupère de l'énergie thermique et voit sa température augmenter en sortie 302 du condenseur 104. Cette énergie thermique peut être valorisée par une unité de valorisation telle que par exemple un réseau de chaleur à basse température ou un dispositif de dessalement d'eau de mer ou de traitement d'effluents par distillation.

### Exemple:

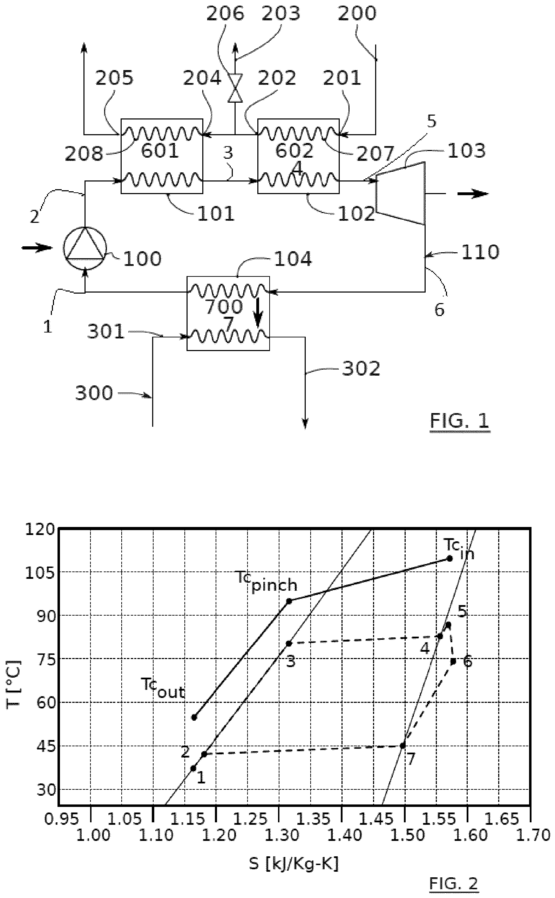

Un système de co-production selon l'invention illustré en figure 1 est mis en application avec un fluide de travail comprenant un mélange d'un premier fluide : 1,1,1,2,2,4,5,5,5-nonafluoro-4-(trifluoromethyl)-3-pentanone et d'un deuxième fluide : 1-methoxyheptafluoropropane avec une fraction molaire du premier fluide de 70% et de 30% pour le deuxième fluide.

Les débits sont donnés dans le tableau suivant :

**Tableau 1**

| | débits kg/s |
|---|---|
| Débit de la source chaude 200 en amont de l'évaporateur 102 | 0,43 |
| Débit de la source chaude 200 circulant dans l'échangeur de préchauffage 101 | 0,086 |
| Débit de la source chaude 200 prélevé à la sortie de piquage 203 | 0,344 |
| Débit du fluide de travail | 0,2933 |
| Débit de la source froide 300 circulant dans le condenseur 104 | 0,506 |

Les températures externes au module de Rankine sont données dans le tableau suivant :

**Tableau 2**

| | T °C |
|---|---|
| Température de la source chaude 200 en entrée 201 de l'évaporateur 102 | 110 |
| Température de la source chaude 200 en sortie 205 de l'échangeur de préchauffage 101 | 54,94 |
| Température de la source chaude 200 la sortie de piquage 203 | 95,36 |
| Température de la source froide 300 en entrée 301 du condenseur 104 | 15 |
| Température de la source froide 300 en sortie 302 du condenseur 104 | 33,33 |

Les pressions internes sont données dans le tableau suivant :

**Tableau 3**

| | Pression - Bar |
|---|---|
| Pression haute (de la sortie pompe 100 à l'entrée de l'expanseur 103) | 3,347 |
| Pression basse (de la sortie de l'expanseur 103 à l'entrée pompe 100) | 1,047 |

Les températures internes au module de Rankine ainsi que les entropies sont visibles sur le graphique illustré en figure 2.

La présence d'une sortie de piquage 203, avantageusement associée à un module de réglage du débit de prélèvement a pour conséquence sur le diagramme de la figure 2 que la courbe de la source chaude présente une inflexion de la pente avec comme point d'inflexion la température Tcplnch. La température de la source chaude entre ce point d'inflexion Tcplnch correspondant physiquement à la sortie de piquage 203 et la sortie 205 de la source chaude hors de l'échangeur de préchauffage 101 suit au plus près la courbe de la température du fluide de travail traversant l'échangeur de préchauffage 101. D'un point de vue quantitatif, le rendement éxergétique de l'échangeur de préchauffage 101 passe de 63,15% à 77.2% en utilisant le piquage. Le rendement exergétique est le rapport le flux d'exergie du fluide de travail et le flux d'exergie de la source chaude; les flux étant considérés aux bornes de l'échangeur. L'exergie correspond à l'énergie utile d'un système.

L'utilisation d'un mélange non azéotrope comme fluide de travail circulant dans le module de Rankine présente l'intérêt d'avoir une meilleure adéquation en termes de température notamment entre la source chaude et le fluide de travail circulant dans l'évaporateur 102. Cette disposition a pour conséquence sur le diagramme de la figure 2 que la courbe du fluide de travail entre les points 3 et 4 n'est pas horizontale. Cette inclinaison assure une plus grande proximité des courbes du fluide de travail et de la source chaude.

D'un point de vue quantitatif, le rendement exergétique à l'évaporateur 102 passe de 73,93% à 81.03% grâce à l'utilisation d'un mélange non azéotrope.

La température de la source chaude en sortie de piquage 203 est dans le présent exemple de l'ordre de 95°C. Ce niveau de température permet d'accéder à différents types d'application de valorisation. Le niveau de puissance thermique réellement valorisable en sortie de piquage 203 est de 22 kW. On constate qu'une telle valorisation thermique est tout à fait significative.

Le tableau suivant résume les performances de l'invention de ce point de vue.

**Tableau 4**

| | | Cycle de Rankine | Cycle de Rankine | Système selon l'invention |
|---|---|---|---|---|
| | | - avec fluide de travail pur | - avec fluide de travail mélange zéotrope | |
| | | | | - avec fluide de travail mélange zéotrope |
| | | - sans sortie de piquage | | |
| | | | - sans sortie de piquage | |
| | | | | - avec sortie de piquage |
| Température de la source chaude 200 en entrée 207 | C | 110 | 110 | 110 |
| Puissance disponible à la source chaude 200 en entrée 207 | KW | 170 | 170 | 170 |
| Lieu de valorisation | | Sortie de l'échangeur assurant préchauffage et - évaporation | Sortie de l'échangeur assurant préchauffage et - évaporation | Sortie de piquage 203 |
| Température de valorisation | C | 76,9 | 87,3 | 95,4 |
| Puissance thermique réellement valorisable | KW | 0 | 13,1 | 22,1 |

### LISTE DES REFERENCES

1.Température fluide de travail en entrée de pompe
2.Température fluide de travail en entrée de l'échangeur de préchauffage
3.Température fluide de travail en sortie de l'échangeur de préchauffage
4.Température fluide de travail dans l'évaporateur
5.Température fluide de travail en sortie de l'évaporateur
6.Température fluide de travail en sortie de l'expanseur
7.Température fluide de travail dans le condenseur
100.Pompe
101.Echangeur de préchauffage
102.Evaporateur
103.Expanseur
104.Condenseur
110.Circuit fluidique thermodynamique
200.Source chaude
201.Entrée Source chaude dans l'évaporateur
202.Sortie Source chaude dans l'évaporateur
203.Sortie de piquage
204.Entrée source chaude dans l'échangeur de préchauffage
205.Sortie source chaude dans l'échangeur de préchauffage
206.Vanne
207.Première branche
208.Deuxième branche
300.Source froide
301.Entrée source froide dans le condenseur
302.Sortie source froide du condenseur
400.Energie pour travail de la pompe
500.Energie produite par le travail de la turbine
601.Échange thermique dans l'évaporateur
602.Échange thermique dans l'échangeur de préchauffage
700.Échange thermique dans le condenseur

## Revendications

1. Système de cogénération d'énergie électrique et énergie thermique comprenant :
▪ un module à cycle organique de Rankine destiné à la production d'énergie électrique comprenant une pompe (100), un échangeur de préchauffage (101), un évaporateur (102), un expanseur (103), un condenseur (104) et un circuit fluidique (110) apte à recevoir un fluide de travail, et
▪ un circuit de circulation d'une source de chaleur (200) comprenant une première branche (207) agencée au niveau de l'évaporateur (102) pour assurer un échange thermique (602) entre la source chaude (200) et le fluide de travail au niveau de l'évaporateur (102),
le circuit de circulation de la source de chaleur (200) comprenant :
▪ une deuxième branche (208) agencée au niveau de l'échangeur de préchauffage (101) pour assurer un échange thermique entre la source chaude (200) issue de l'évaporateur (102) et le fluide de travail au niveau de l'échangeur de préchauffage (101), la première branche (207) et la deuxième branche (208) étant agencées en série configurées pour que la source de chaleur (200) circule successivement dans la première branche (207) puis dans la deuxième branche (208), et
▪ une sortie de piquage (203) agencée entre la première branche (207) et la deuxième branche (208) configurée pour assurer une sortie intermédiaire de la source chaude (200) issue de l'évaporateur (102) configurée pour être connectée à une unité de valorisation d'énergie thermique destinée à l'utilisation de l'énergie thermique de la source chaude (200).

2. Système de cogénération selon la revendication précédente dans lequel le fluide de travail comprend un mélange d'au moins deux fluides, le mélange étant zéotrope.

3. Système de cogénération selon l'une quelconque des revendications précédentes dans lequel le système comprend une unité de valorisation associée à la sortie de piquage (203) configurée pour la valorisation de la source chaude (200) au niveau de la sortie de piquage (203).

4. Système de cogénération selon l'une quelconque des revendications précédentes dans lequel le système comprend une unité de valorisation associée à une sortie (205) de la deuxième branche (208) configurée pour la valorisation de la source chaude (200) à la sortie de la deuxième branche (208).

5. Système de cogénération selon l'une quelconque des revendications précédentes dans lequel le système comprend un circuit de circulation d'une source froide (300) au niveau du condenseur (104) configurer pour valoriser la chaleur fatale dissipée par le condenseur (104).

6. Système de cogénération selon la revendication précédente dans lequel le système comprend une unité de valorisation associée à la source froide (300) configurée pour la valorisation de la source froide (300) en sortie (302) du condenseur (104).

7. Système de cogénération selon l'une quelconque des revendications précédentes dans lequel le système comprend un module de réglage du débit prélèvement de la source chaude (200) au niveau de la sortie de piquage (203).

8. Système de cogénération selon l'une quelconque des revendications précédentes dans lequel le système comprend un dispositif de contrôle de la composition du fluide de travail configuré pour gérer la composition du fluide de travail.

9. Procédé de cogénération d'énergie électrique et d'énergie thermique par un système de cogénération selon l'une quelconque des revendications 1 à 8 **caractérisé en ce qu'**il comprend la circulation d'une source chaude (200) au niveau de l'évaporateur (102) et de l'échangeur de préchauffage (101) pour assurer la production d'énergie électrique par le module de cycle organique de Rankine et la circulation de la source chaude (200) au niveau de la sortie de piquage (203) pour la valorisation de l'énergie thermique de la source chaude.

10. Procédé selon la revendication précédente comprenant le réglage du débit de prélèvement de la source chaude (200) au niveau de la source de piquage (203) en fonction des besoins en production d'énergie électrique et en production d'énergie thermique.

11. Procédé selon l'une quelconque des deux revendications précédentes comprenant le contrôle du débit de prélèvement de la source chaude (200) au niveau de la sortie de piquage (203) en fonction des besoins en production d'énergie électrique et en production d'énergie thermique.

12. Procédé selon l'une quelconque des trois revendications précédentes comprenant le contrôle de la composition du fluide de travail de sorte à faire varier ladite composition.

## Patentansprüche

1. System zur gleichzeitigen Erzeugung von elektrischer Energie und Wärmeenergie, das Folgendes umfasst:
▪ ein Modul mit organischem Rankine-Zyklus, das zur Erzeugung elektrischer Energie bestimmt ist, das eine Pumpe (100), einen Vorheiz-Wärmetauscher (101), einen Verdampfer (102), einen Expander (103), einen Kondensator (104) und einen Fluidkreislauf (110), der dazu geeignet ist, ein Arbeitsfluid aufzunehmen, umfasst, und
▪ einen Umwälzkreislauf einer Wärmequelle (200), der einen ersten Zweig (207) umfasst, der auf der Ebene des Verdampfers (102) eingerichtet ist, um einen Wärmeaustausch (602) zwischen der heißen Quelle (200) und dem Arbeitsfluid auf der Ebene des Verdampfers (102) sicherzustellen,
wobei der Umwälzkreislauf der Wärmequelle (200) Folgendes umfasst:
▪ einen zweiten Zweig (208), der auf der Ebene des Vorheiz-Wärmetauschers (101) eingerichtet ist, um einen Wärmeaustausch zwischen der heißen Quelle (200), die aus dem Verdampfer (102) hervorgeht, und dem Arbeitsfluid auf der Ebene des Vorheiz-Wärmetauschers (101) sicherzustellen, wobei der erste Zweig (207) und der zweite Zweig (208) in Reihe eingerichtet sind, die dazu konfiguriert sind, dass die Wärmequelle (200) nacheinander in dem ersten Zweig (207), dann in dem zweiten Zweig (208) umgewälzt wird, und
▪ einen Abzweigausgang (203), der zwischen dem ersten Zweig (207) und dem zweiten Zweig (208) eingerichtet ist, der dazu konfiguriert ist, einen Zwischenausgang der heißen Quelle (200), die aus dem Verdampfer (102) hervorgeht, sicherzustellen, der dazu konfiguriert ist, an eine Wärmeenergie-Verwertungseinheit angeschlossen zu sein, die zur Verwendung der Wärmeenergie der heißen Quelle (200) bestimmt ist.

2. System zur gemeinsamen Erzeugung nach dem vorstehenden Anspruch, wobei das Arbeitsfluid ein Gemisch aus mindestens zwei Fluiden umfasst, wobei das Gemisch zeotrop ist.

3. System zur gemeinsamen Erzeugung nach einem der vorstehenden Ansprüche, wobei das System eine Verwertungseinheit umfasst, die dem Abzweigausgang (203) zugeordnet ist, der für die Verwertung der heißen Quelle (200) auf der Ebene des Abzweigausgangs (203) konfiguriert ist.

4. System zur gemeinsamen Erzeugung nach einem der vorstehenden Ansprüche, wobei das System eine Verwertungseinheit umfasst, die einem Ausgang (205) des zweiten Zweiges (208) zugeordnet ist, der für die Verwertung der heißen Quelle (200) an dem Ausgang des zweiten Zweiges (208) konfiguriert ist.

5. System zur gemeinsamen Erzeugung nach einem der vorstehenden Ansprüche, wobei das System einen Umwälzkreislauf einer kalten Quelle (300) auf der Ebene des Kondensators (104) umfasst, der dazu konfiguriert ist, die Abwärme, die von dem Kondensator (104) abgeleitet wird, zu verwerten.

6. System zur gemeinsamen Erzeugung nach dem vorstehenden Anspruch, wobei das System eine Verwertungseinheit umfasst, die der kalten Quelle (300) zugeordnet ist, die für die Verwertung der kalten Quelle (300) am Ausgang (302) des Kondensators (104) konfiguriert ist.

7. System zur gemeinsamen Erzeugung nach einem der vorstehenden Ansprüche, wobei das System ein Regulierungsmodul des Entnahmedurchsatzes der heißen Quelle (200) auf der Ebene des Abzweigausgangs (203) umfasst.

8. System zur gemeinsamen Erzeugung nach einem der vorstehenden Ansprüche, wobei das System eine Steuervorrichtung der Zusammensetzung des Arbeitsfluids umfasst, die dazu konfiguriert ist, die Zusammensetzung des Arbeitsfluids zu verwalten.

9. Verfahren zur gemeinsamen Erzeugung von elektrischer Energie und Wärmeenergie durch ein System zur gemeinsamen Erzeugung nach einem der Ansprüche 1 bis 8, **dadurch gekennzeichnet, dass** es die Umwälzung einer heißen Quelle (200) auf der Ebene des Verdampfers (102) und des Vorheiz-Wärmetauschers (101) umfasst, um die Erzeugung elektrischer Energie durch das Modul mit organischem Rankine-Zyklus sicherzustellen, und die Umwälzung der heißen Quelle (200) auf der Ebene des Abzweigausgangs (203) für die Verwertung der Wärmeenergie der heißen Quelle sicherzustellen.

10. Verfahren nach dem vorstehenden Anspruch, das das Regulieren des Entnahmedurchsatzes der heißen Quelle (200) auf der Ebene der Abzweigquelle (203) in Abhängigkeit von den Erfordernissen an Erzeugung elektrischer Energie und Erzeugung von Wärmeenergie umfasst.

11. Verfahren nach einem der beiden vorstehenden Ansprüche, das die Steuerung des Entnahmedurchsatzes der heißen Quelle (200) auf der Ebene des Abzweigausgangs (203) in Abhängigkeit von den Erfordernissen an Erzeugung elektrischer Energie und an Erzeugung von Wärmeenergie umfasst.

12. Verfahren nach einem der drei vorstehenden Ansprüche, das die Steuerung der Zusammensetzung des Arbeitsfluids derart umfasst, dass die Zusammensetzung variiert.

## Claims

1. System for co-generation of electrical energy and thermal energy comprising:
▪ an organic Rankine cycle module intended to produce electrical energy comprising a pump (100), a preheating exchanger (101), an evaporator (102), an expander (103), a condenser (104) and a fluid circuit (110) capable of receiving a working fluid, and
▪ a circuit for circulating a heat source (200) comprising a first branch (207) arranged at the evaporator (102) to ensure a heat exchange (602) between the hot source (200) and the working fluid at the evaporator (102),
the circuit for circulating the heat source (200) comprising:
▪ a second branch (208) arranged at the preheating exchanger (101) to ensure a heat exchange between the hot source (200) coming from the evaporator (102) and the working fluid at the preheating exchanger (101), the first branch (207) and the second branch (208) being arranged in series, configured such that the heat source (200) circulates successively in the first branch (207) then in the second branch (208), and
▪ a tap outlet (203) arranged between the first branch (207) and the second branch (208) configured to ensure an intermediate outlet of the hot source (200) coming from the evaporator (102), configured to be connected to a thermal energy enhancement unit intended to use the thermal energy from the hot source (200).

2. System for co-generation according to the preceding claim, wherein the working fluid comprises a mixture of at least two fluids, the mixture being zeotropic.

3. System for co-generation according to any one of the preceding claims, wherein the system comprises an enhancement unit associated with the tap outlet (203), configured to enhance the hot source (200) at the tap outlet (203).

4. System for co-generation according to any one of the preceding claims, wherein the system comprises an enhancement unit associated with an outlet (205) of the second branch (208), configured to enhance the hot source (200) at the outlet of the second branch (208).

5. System for co-generation according to any one of the preceding claims, wherein the system comprises a circuit for circulating a cold source (300) at the condenser (104), configured to enhance the waste heat dissipated by the condenser (104).

6. System for co-generation according to the preceding claim, wherein the system comprises an enhancement unit associated with the cold source (300), configured to enhance the cold source (300) at the outlet (302) of the condenser (104).

7. System for co-generation according to any one of the preceding claims, wherein the system comprises a module for adjusting the sample flow rate of the hot source (200) at the tap outlet (203).

8. System for co-generation according to any one of the preceding claims, wherein the system comprises a device for controlling the composition of the working fluid, configured to manage the composition of the working fluid.

9. Method for co-generating electrical energy and thermal energy by a system for co-generation according to any one of claims 1 to 8, **characterised in that** it comprises the circulation of a hot source (200) at the evaporator (102) and at the preheating exchanger (101) to ensure the production of electrical energy by the organic Rankine cycle module and the circulation of the hot source (200) at the tap outlet (203) to enhance the thermal energy of the hot source.

10. Method according to the preceding claim, comprising the adjustment of the sample flow rate of the hot source (200) at the tap source (203) according to the electrical energy production and thermal energy production needs.

11. Method according to any one of the two preceding claims, comprising the control of the sample flow rate of the hot source (200) at the tap outlet (203) according to the electrical energy production and thermal energy production needs.

12. Method according to any one of the three preceding claims, comprising the control of the composition of the working fluid so as to make said composition vary.
